# EUROPEAN PATENT SPECIFICATION

(11) **EP 2 940 835 B1**
(45) Date of publication and mention of the grant of the patent: **12.06.2019**
(21) Application number: 15163597.6
(22) Date of filing: 14.04.2015
(51) Int. Cl.: H02K 5/20, H02K 9/00, F04D 17/12, F04D 25/06, F04D 29/58, H02K 9/19, H02K 9/22, H02K 7/14, H02K 5/167

(54) **ELECTRIC MOTOR-DRIVEN COMPRESSOR HAVING BI-DIRECTIONAL LIQUID COOLANT PASSAGE**
MIT ELEKTROMOTOR BETRIEBENER VERDICHTER MIT BIDIREKTIONALEM FLÜSSIGKÜHLMITTELKANAL
COMPRESSEUR ENTRAÎNÉ PAR UN MOTEUR ÉLECTRIQUE AYANT UN PASSAGE DE LIQUIDE DE REFROIDISSEMENT BIDIRECTIONNEL

(30) Priority: 29.04.2014 US 201414264677
(43) Date of publication of application: 04.11.2015
(73) Proprietor: Garrett Transportation I Inc., Torrance, CA 90504 (US)
(72) Inventor: Thompson, Glenn F., Morristown, NJ New Jersey 07962-2245 (US); Beresewicz, Patrick, Morristown, NJ New Jersey 07962-2245 (US); Guidry, Mike, Morristown, NJ New Jersey 07962-2245 (US); Mason, John, Morristown, NJ New Jersey 07962-2245 (US); Johnson, Rick, Morristown, NJ New Jersey 07962-2245 (US); Sontag, John, Morristown, NJ New Jersey 07962-2245 (US)
(74) Representative: LKGLOBAL Lorenz & Kopf PartG mbB Patentanwälte

(56) References cited:
- EP-A1- 2 910 789
- WO-A1-2013/028521
- WO-A2-2011/066981
- CN-A- 103 490 559
- CN-A- 103 516 138
- DE-A1- 4 231 921
- JP-A- 2007 159 179
- US-A- 4 516 044
- US-A1- 2002 192 089
- US-A1- 2004 179 947
- US-A1- 2008 223 557
- US-A1- 2011 243 762

## Description

### BACKGROUND

The present disclosure relates to electric motor-driven compressors such as used for fuel cells.

Air compressors can be used to increase the efficiency of a fuel cell by providing compressed air to the cathode side of the fuel cell. A two-stage compressor may be used in some applications requiring a higher pressure than achievable in a single compressor stage. In a two-stage compressor, a low-pressure compressor wheel is provided on a shaft, and a high-pressure compressor wheel is provided on the same shaft. The shaft is driven by an electric motor so that the compressor wheels are rotated, and air enters the low-pressure compressor wheel and is compressed to a first pressure. The compressed air is then passed on to the high-pressure wheel for a further increase in pressure. The air from the high-pressure compressor wheel is then delivered to the fuel cell to promote the fuel cell reaction.

The electric motor used in a compressor for a fuel cell is typically a high-speed, high-output motor that generates a significant amount of heat. Additionally, the air compression process also generates heat. It is necessary to provide effective heat transfer away from the electric motor-driven compressor, such as by circulating a liquid coolant around the motor components.

US2004/179947 A1 describes an electric motor-driven compressor having conventional liquid cooling. Documents also cited during prosecution include JP2007 159179 A; CN 103 490 559 A; US 2008/223557 A1; CN 103 516 138 A; DE 42 31 921 A1; US 4 516 044 A; WO 2013/028521 A1; and US 2002/192089 A1.

### BRIEF SUMMARY OF THE DISCLOSURE

According to a first aspect of the invention, there is provided an electric motor-driven compressor as defined in Claim 1.

The present disclosure describes embodiments of electric motor-driven compressors such as useful with fuel cells or in other applications. In one embodiment, for example, an electric motor-driven compressor includes a housing assembly comprising a motor housing and a compressor housing mounted to the motor housing. The motor housing contains a motor stator and a motor rotor, and defines a bore through which a rotatable shaft passes. The compressor housing contains a centrifugal compressor wheel that is mounted on the shaft for rotation about the shaft axis. The compressor housing also defines an air inlet that leads air into the compressor wheel, and a volute that collects compressed air that has passed through the compressor wheel.

In accordance with the present disclosure, the motor housing defines a liquid coolant passage for circulating a liquid coolant. The configuration of the coolant passage is a particular focus of the present disclosure, and in the illustrated embodiment described herein the coolant passage is a convoluted liquid coolant passage. The coolant passage defines an inlet and an outlet respectively located proximate opposite axial ends of the motor housing, and defines a plurality of axially spaced-apart, convoluted passageways arranged for serial flow of liquid coolant from the inlet, then through each of the convoluted passageways one after another, and finally out from the outlet, wherein the coolant passage splits into two sets of convoluted passageways respectively having right-hand convolutions and left-hand convolutions, each of which convoluted passageways routes the liquid coolant through a series of reversals of flow direction about the motor housing axis, wherein coolant entering through the inlet splits into two portions, one flowing through the right-hand convolutions and the other flowing through the left-hand convolutions, wherein said coolant portions re-join and exit through the outlet.

In one embodiment the coolant passage further defines at least a first bypass passage that intersects with the convoluted passageways and extends in a non-convoluted fashion so as to interconnect the convoluted passageways and provide an alternative flow path for some of the liquid coolant from the inlet to the outlet.

The coolant passage can further define a second bypass passage that intersects with the convoluted passageways and extends in a non-convoluted fashion so as to interconnect the convoluted passageways, the first and second bypass passages being circumferentially spaced apart from each other.

The features of the present invention can be applied to a two-stage serial compressor, such as the embodiment illustrated and described herein. In the case of such a two-stage compressor, a second compressor housing is mounted to an opposite end of the motor housing and a second centrifugal compressor wheel is contained in the second compressor housing and is affixed to an opposite end of the shaft. The second compressor housing defines a second compressor flow path including a second air inlet that leads air into the second compressor wheel, and a second volute that collects compressed air that has passed through and been compressed by the second compressor wheel. An interstage duct connects the second volute to the first air inlet such that air compressed by the second compressor wheel is led by the interstage duct from the second volute into the first air inlet and is further compressed by the first compressor wheel and delivered into the first volute. The second compressor wheel thus constitutes a low-pressure compressor wheel and the first compressor wheel constitutes a high-pressure compressor wheel.

The inlet to the coolant passage advantageously is proximate the high-pressure compressor wheel and the outlet from the coolant passage is proximate the low-pressure compressor wheel.

In the embodiment described herein, the convoluted passageway proximate the high-pressure compressor wheel has a larger cross-sectional area than the convoluted passageway proximate the low-pressure compressor wheel.

The electric motor-driven compressor can further include a heat shield disposed between the motor housing and the first compressor housing, and the heat shield can define a mounting flange captured between the motor housing and the first compressor housing. The mounting flange is in contact with a portion of the motor housing cooled by the coolant passage so as to facilitate heat transfer from the mounting flange to said portion of the motor housing.

In one embodiment, a heat-conducting material is disposed between the motor stator and the motor housing such that the heat-conducting material is in contact with both the motor stator and the motor housing and serves as a thermally conductive pathway from the motor stator to the motor housing. This enhances heat transfer away from the stator and into the liquid coolant. The heat-conducting material can be, for example, a heat-conducting epoxy.

### BRIEF DESCRIPTION OF THE SEVERAL VIEWS OF THE DRAWING(S)

Having thus described the present disclosure in general terms, reference will now be made to the accompanying drawings, which are not necessarily drawn to scale, and wherein:
FIG. 1 is a side view, partly in section, of an electric motor-driven compressor in accordance with one embodiment of the invention, comprising a two-stage compressor having a low-pressure compressor and a high-pressure compressor in series;
FIG. 2 is a perspective view of a coolant core used in the casting of the motor housing in FIG. 1, which core dictates the configuration of the liquid coolant passage in the motor housing;
FIG. 3 is another perspective view of the coolant core; and
FIG. 4 is yet another perspective view of the coolant core.

### DETAILED DESCRIPTION OF THE DRAWINGS

The present invention now will be described more fully hereinafter with reference to the accompanying drawings in which some but not all embodiments of the invention are shown. Indeed, aspects of the invention may be embodied in many different forms and should not be construed as limited to the embodiments set forth herein; rather, these embodiments are provided so that this disclosure will satisfy applicable legal requirements. Like numbers refer to like elements throughout.

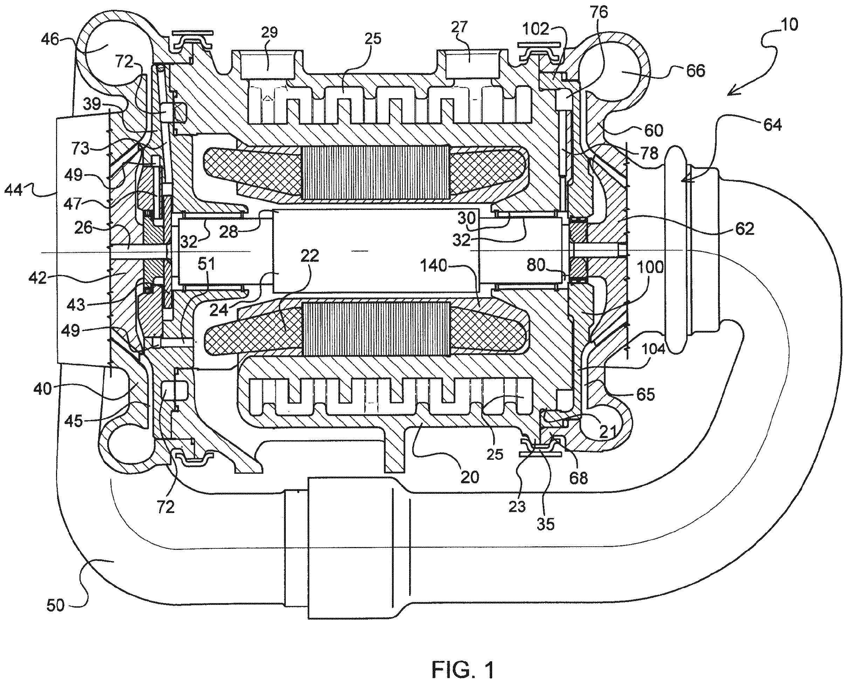

The present invention may be applied in a variety of types of electric motor-driven compressors, including single-stage as well as multi-stage electric motor-driven compressors. The particular embodiment described herein for purposes of explaining the principles of the invention is a serial two-stage compressor having two centrifugal compressors arranged in series, but the invention is applicable to parallel two-stage compressors as well as other types. Thus, a simplified cross-sectional view of a serial two-stage electric motor-driven compressor **10** for use with a fuel cell (such as a proton exchange membrane (PEM) fuel cell) is shown in FIG. 1. The two-stage compressor **10** includes a housing assembly comprising a motor housing **20,** a low-pressure compressor housing **40** mounted to one end of the motor housing, and a high-pressure compressor housing **60** mounted to the other end of the motor housing. The motor housing **20** contains a motor stator **22** and a motor rotor **24** having a shaft **26** about which permanent magnets **28** are fixedly mounted. The motor housing **20** defines a bore **30** through which the motor rotor **24** and the shaft **26** pass. Air journal bearings **32** are disposed in the motor housing **20** for rotatably supporting the rotor **24** and shaft **26.** The low-pressure side journal air bearings **32** are retained in a separate bearing housing **39** disposed between the motor housing **20** and the low-pressure compressor housing **40.**

The low-pressure compressor housing **40** contains a centrifugal low-pressure compressor wheel **42** that is mounted on one end of the shaft **26** for rotation therewith, the low-pressure compressor housing also defining a low-pressure compressor flow path including an air inlet **44** that leads air into the low-pressure compressor wheel, and a low-pressure volute **46** that collects compressed air that has passed through and been compressed by the low-pressure compressor wheel. The low-pressure compressor also includes a diffuser **45** that leads the compressed air from the low-pressure compressor wheel **42** into the low-pressure volute **46,** and serves to reduce the velocity and increase the static pressure of the air going into the volute.

The high-pressure compressor housing **60** contains a centrifugal high-pressure compressor wheel **62** that is mounted on the opposite end of the shaft **26** for rotation therewith. The high-pressure compressor housing defines a high-pressure compressor flow path including an air inlet **64** that leads air into the high-pressure compressor wheel, and a high-pressure volute **66** that collects compressed air that has passed through and been compressed by the high-pressure compressor wheel. The high-pressure compressor also includes a diffuser **65** that leads the compressed air from the high-pressure compressor wheel **62** into the high-pressure volute **66,** and serves to reduce the velocity and increase the static pressure of the air going into the volute.

The compressor further includes an interstage duct **50** that is connected between the low-pressure volute **46** and the inlet **64** to the high-pressure compressor for routing the compressed air from the low-pressure volute **46** to the high-pressure compressor for further pressurizing in a second-stage compression process.

Cooling air passages are defined in the housing assembly for supplying cooling air to the air bearings **32.** In particular, cooling air is supplied into a cooling air supply inlet (not shown) defined in the motor housing **20.** For example, in the case of the compressor **10** being used in a fuel cell system for a vehicle, where the compressed air from the high-pressure volute **66** is passed through a vehicle heat exchanger to cool the air before it is supplied to the fuel cell, a portion of the air exiting the heat exchanger can be tapped off and supplied into the cooling air supply inlet. From there, the cooling air passes into an annulus **72** defined cooperatively by the motor housing **20** and the bearing housing **39.** A portion of the cooling air in the annulus **72** is directed radially inwardly through passage **73** defined in the bearing housing **39** and is fed to both sides of a thrust plate **43** for the low-pressure side air thrust bearing. The air on the inboard (motor) side of the thrust plate **43** feeds the journal air bearing **32** (also cooling the rotor magnet **28**) and is then discharged into the motor cavity. The air on the outboard side of the thrust plate **43** proceeds radially outwardly through passages **47** into an annular space **49** defined in the compressor housing, and from there it proceeds through a passage **51** into the motor cavity.

The remainder of the cooling air in the annulus **72** is directed through an axially extending cooling air conduit (not shown) that extends from the annulus **72** through the motor housing **20** and connects with a further annulus **76** in the region of the high-pressure compressor. The motor housing **20** defines cooling air passages **78** that lead from the annulus **76** generally radially inwardly into a generally annular space **80** at the high-pressure end of the motor rotor **24.** Cooling air fed into the generally annular space **80** passes generally axially (to the left in FIG. 1) and feeds the journal air bearing **32** for the rotor **24** (also cooling the rotor magnet **28**) and is then discharged into the motor cavity.

The cooling air in the motor cavity is evacuated from the motor cavity via a port (not shown).

The high-pressure compressor includes a generally annular heat shield **100** that is formed separately from the high-pressure compressor housing **60** and the motor housing **20** and is disposed therebetween. In particular, the heat shield **100** has a flange **102** at its radially outer periphery, and the flange **102** is disposed, with respect to the radial direction, between a flange **68** of the compressor housing **60** and a shoulder **21** of the motor housing **20,** and is sandwiched between the flange **68** and shoulder **21** so as to constrain the heat shield radially. The heat shield flange **102** is captured and constrained axially between a motor housing flange **23** and a shoulder on the HP compressor housing **60.** A V-band clamp **35** clamps together the motor housing flange **23** and HP compressor housing flange **68,** and a sealing ring disposed between the HP compressor housing shoulder and the heat shield flange **102** is thereby axially compressed between these parts, thereby sealing the interface between the heat shield and the compressor housing. The heat shield **100** includes a radially directed wall portion **104** that extends radially inwardly from the flange **102** and defines one wall of the diffuser **65** for the compressed air delivered into the HP volute **66,** an opposite wall of the diffuser being defined by the HP compressor housing **60.**

With continued reference to FIG. 1, the previously described cooling air annulus **76** is defined cooperatively by the heat shield **100** and the motor housing **20.** The cooling air passages **78** in the motor housing extend from the annulus **76** radially inwardly and feed the cooling air into the space **80** from which the air feeds the journal bearing as previously described. Thus, the heat shield **100** cooperates with the housing assembly to define part of the cooling air passages for the cooling air supplied to the air bearings.

The heat shield **100** also helps minimize heat transfer from the hot motor housing **20** to the air passing through the high-pressure compressor. To this end, the motor housing **20** makes little contact with the heat shield **100.** The motor housing **20** defines a liquid coolant passage **25** for circulating a liquid coolant through the housing around the stator **22.** The heat shield's mounting flange **102** captured between the motor housing **20** and the HP compressor housing **60** is in contact with a portion of the motor housing cooled by the liquid coolant in the liquid coolant passage **25** (note the close proximity of the flange **102** to the coolant passage **25** in FIG. 1) so as to facilitate heat transfer from the mounting flange to said portion of the motor housing. There is also an air gap between the heat shield **100** and the motor housing **20.** Air from the annulus **76** supercharges this dead-headed air gap. All of these features contribute toward the minimization of heat transfer from the motor housing, via the heat shield, to the air being compressed in the HP compressor.

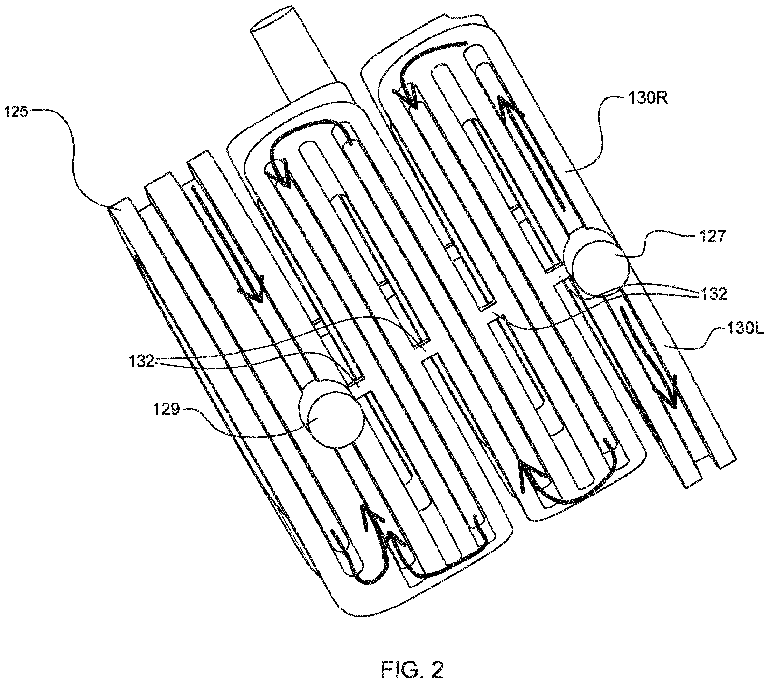

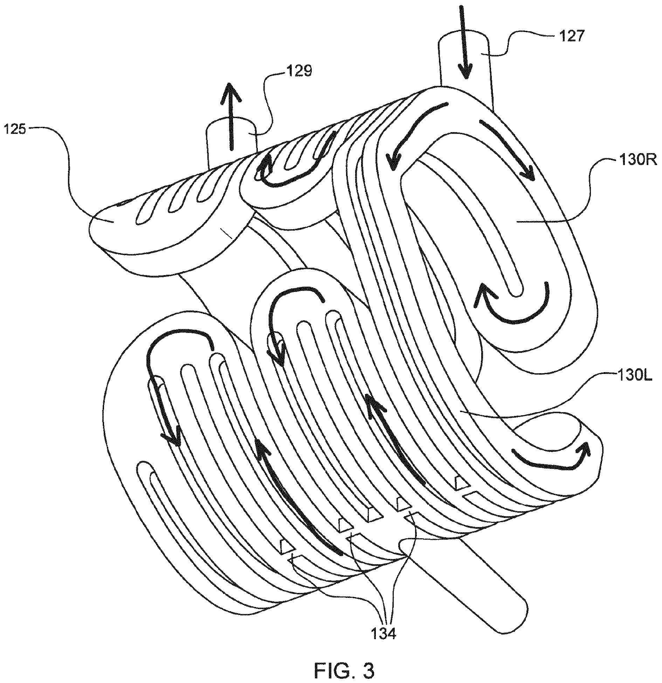

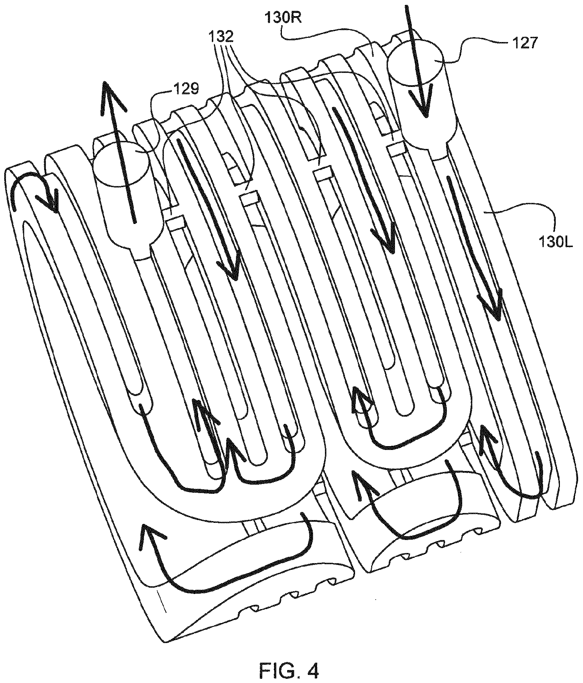

The present disclosure concerns in particular a number of features that improve the heat transfer from the motor stator **22** and rotor **24** in order to control the temperature of these components. One of these features is the configuration of the liquid coolant passage **25** in the motor housing. With reference to FIG. 1, the motor housing **20** defines an inlet **27** into the coolant passage **25,** and an outlet **29** through which the liquid coolant exits the motor housing after having progressed from the inlet **27** and along the coolant passage **25** to the outlet **29.** The inlet **27** is proximate the high-pressure compressor side and the outlet **29** is proximate the low-pressure compressor side. As shown in FIG. 1 and further described below in connection with FIGS. 2 through 4, the coolant passage **25** has a generally C-shaped cross-section along a plane generally perpendicular to the direction of liquid coolant flow in the passage. The generally C-shaped passage increases the surface area of the motor housing in contact with the liquid coolant, and thereby enhances heat transfer from the housing into the coolant. It will also be noted from FIG. 1 that the size of the passage cross-section is larger in the portion of the passage proximate the HP compressor, relative to the size of the passage proximate the LP compressor, because the HP compressor has a higher heat load than the LP compressor.

With reference to FIG. 2, a coolant core **125** for use in casting the motor housing **20** is shown in perspective view. Showing the coolant core **125** is a useful way of depicting the configuration of the coolant passage **25** because the passage **25** is a negative of the positive pattern of the coolant core **125.** A gravity-pour sand casting process can be used for casting the motor housing **20.** Advantageously the motor housing can be formed of an aluminum alloy. The coolant core **125** is made of compacted sand and is easily disintegrated and removed from the cast motor housing after the metal has solidified and cooled. The coolant passage **25** in the cast motor housing comprises a cavity having the shape of the core **125.**

As best seen in FIGS. 2 through 4, the coolant core **125** creates a coolant passage having a plurality of axially spaced, convoluted passageways. That is, the coolant passage **25** is not a simple helical passage that coils about the motor housing. Rather, the coolant passage splits into two sets of convoluted passageways each of which routes the liquid coolant through a series of reversals of flow direction about the motor housing axis. Accordingly, the core **125** defines an inlet portion **127** for forming the inlet **27** of the coolant passage, and the inlet portion connects with convoluted portions **130R** and **130L.** Coolant entering through the inlet **27** splits into two portions, one flowing through the right-hand convolutions (represented by the convoluted portions **130R**) and the other flowing through the left-hand convolutions (represented by the convoluted portions **130L**). Referring to FIGS. 2-4, arrows are shown to indicate the direction of liquid coolant flow along the coolant passage, which is represented by the positive pattern of the coolant core. The coolant portions rejoin and exit through the outlet, represented by the outlet portion **129.**

Additionally, the coolant passage defines at least one bypass passage, and in the illustrated embodiment there are two such bypass passages, which are represented in the coolant core by the tie bars **132** and **134.** There is a first set of tie bars **132** located at the top of the coolant core **125** along with the inlet and outlet portions **127, 129,** and a second set of tie bars **134** located along the bottom of the core. The tie bars **132** and **134** are connected between adjacent convoluted portions **130** of the coolant core **125** and serve to stabilize the convoluted portions. In addition, the tie bars **132** collectively define a coolant bypass passage in the cast motor housing, and likewise the tie bars **134** collectively define a second bypass passage. Each of the bypass passages intersects the convoluted passageways and extends in a non-convoluted fashion so as to provide alternative flow paths for the coolant to flow between the inlet and the outlet. A particular advantage of the bypass passage at the top, formed by the tie bars **132,** is in helping bleed air from the coolant passage **25** during charging of the passage with liquid coolant.

With reference to FIG. 1, a further feature that can be included for facilitating heat transfer away from the motor stator **22** is a heat-conducting material **140** disposed between the stator **22** and the motor housing **20** such that the heat-conducting material is in contact with both the stator and the motor housing. For example, the heat-conducting material **140** can be a heat-conducting epoxy or the like. The heat-conducting material **140** serves as a thermally conductive pathway from the stator **22** to the motor housing **20,** which in turn is cooled by the coolant flowing through the coolant passage **25.**

While the invention has been described by reference to an electric motor-driven two-stage serial compressor, the invention may also be applied to other electric motor-driven compressors, such as a single-stage compressor. In the appended claims, references to a "first compressor wheel" are to be understood as applying either to the HP compressor wheel of a two-stage serial compressor (in which case the "second compressor wheel" is the LP compressor wheel), or to a compressor wheel in a single-stage compressor.

Many modifications and other embodiments of the invention set forth herein will come to mind to one skilled in the art to which this invention pertains having the benefit of the teachings presented in the foregoing descriptions and the associated drawings. Therefore, it is to be understood that the invention is not to be limited to the specific embodiments disclosed and that modifications may be made without departing from the scope of the invention, which is defined in the appended claims.

## Claims

1. An electric motor-driven compressor (10) comprising:
a housing assembly comprising a motor housing (20) and a first compressor housing (40) mounted to one end of the motor housing (20), the motor housing (20) containing a motor stator (22) and a motor rotor (24) having a shaft (26), the motor housing (20) defining a bore (30) through which the motor rotor (24) and the shaft (26) pass;
the first compressor housing (40) containing a first centrifugal compressor wheel (42) that is mounted on one end of the shaft (26) for rotation therewith, the first compressor housing (40) also defining a first compressor flow path including a first air inlet (44) that leads air into the first compressor wheel (42), and a first volute (46) that collects compressed air that has passed through and been compressed by the first compressor wheel (42); and
the motor housing (20) defining a convoluted liquid coolant passage (25) therein, the coolant passage defining an inlet (27) and an outlet (29) respectively located proximate opposite axial ends of the motor housing, the coolant passage (25) defining a plurality of axially spaced-apart, convoluted passageways arranged for serial flow of liquid coolant from the inlet (27), then through each of the convoluted passageways one after another, and finally out from the outlet (29), **characterized in that**:
the coolant passage (25) splits into two sets of convoluted passageways respectively having right-hand convolutions (130R) and left-hand convolutions (130L), each of which convoluted passageways routes the liquid coolant through a series of reversals of flow direction about the motor housing axis, wherein coolant entering through the inlet (27) splits into two portions, one flowing through the right-hand convolutions (130R) and the other flowing through the left-hand convolutions (130L), wherein said coolant portions rejoin and exit through the outlet (29).

2. The electric motor-driven compressor of claim 1, the coolant passage (25) further defining at least a first bypass passage that intersects with the convoluted passageways and extends in a non-convoluted fashion so as to interconnect the convoluted passageways and provide an alternative flow path for some of the liquid coolant from the inlet to the outlet.

3. The electric motor-driven compressor of claim 2, wherein the coolant passage (25) further defines a second bypass passage that intersects with the convoluted passageways and extends in a non-convoluted fashion so as to interconnect the convoluted passageways, the first and second bypass passages being circumferentially spaced apart from each other.

4. The electric motor-driven compressor of claim 1, further comprising a second compressor housing (60) mounted to an opposite end of the motor housing and a second centrifugal compressor wheel (62) contained in the second compressor housing and affixed to an opposite end of the shaft (26), the second compressor housing (60) defining a second compressor flow path including a second air inlet (64) that leads air into the second compressor wheel (62), and a second volute that collects compressed air that has passed through and been compressed by the second compressor wheel (62), and further comprising an interstage duct (50) that connects the second volute (66) to the first air inlet such that air compressed by the second compressor wheel (62) is led by the interstage duct (50) from the second volute into the first air inlet and is further compressed by the first compressor wheel (42) and delivered into the first volute, the second compressor wheel (62) thus constituting a low-pressure compressor wheel (42) and the first compressor wheel constituting a high-pressure compressor wheel (62).

5. The electric motor-driven compressor of claim 4, wherein the inlet to the coolant passage is proximate the high-pressure compressor wheel (62) and the outlet from the coolant passage is proximate the low-pressure compressor wheel (42).

6. The electric motor-driven compressor of claim 4, wherein the convoluted passageway proximate the high-pressure compressor wheel (62) has a larger cross-sectional area than the convoluted passageway proximate the low-pressure compressor wheel (42).

7. The electric motor-driven compressor of claim 4, further comprising a heat shield (100) disposed between the motor housing (20) and the first compressor housing (40), wherein the heat shield (100) defines a mounting flange (102) captured between the motor housing (20) and the first compressor housing (40), the mounting flange (102) being in contact with a portion of the motor housing cooled by the coolant passage so as to facilitate heat transfer from the mounting flange (102) to said portion of the motor housing.

8. The electric motor-driven compressor of claim 1, further comprising a heat-conducting material (140) disposed between the motor stator (22) and the motor housing (20) such that the heat-conducting material (140) is in contact with both the motor stator (22) and the motor housing (20) and serves as a thermally conductive pathway from the motor stator (22) to the motor housing (20).

9. The electric motor-driven compressor of claim 8, wherein the heat-conducting material (140) is a heat-conducting epoxy.

## Patentansprüche

1. Durch einen Elektromotor angetriebener Verdichter (10), umfassend:
eine Gehäuseanordnung, die ein Motorgehäuse (20) und ein an einem Ende des Motorgehäuses (20) befestigtes erstes Verdichtergehäuse (40) umfasst, wobei das Motorgehäuse (20) einen Motorstator (22) und einen eine Welle (26) aufweisenden Motorrotor (24) enthält, wobei das Motorgehäuse (20) eine Bohrung (30) definiert, durch die der Motorrotor (24) und die Welle (26) führen,
wobei das erste Verdichtergehäuse (40) ein erstes Radialverdichterrad (42), das an einem Ende der Welle (26) zur Drehung mit derselben befestigt ist, wobei das erste Verdichtergehäuse (40) außerdem einen ersten Verdichterströmungsweg definiert, der einen ersten Lufteinlass (44) umfasst, der Luft in das erste Verdichterrad (42) leitet, und eine erste Verdichterschnecke (46) enthält, die Druckluft sammelt, die das erste Verdichterrad (42) passiert hat und von demselben verdichtet wurde, und
wobei das Motorgehäuse (20) einen gewundenen Flüssigkühlmittelkanal (25) in demselben definiert, wobei der Kühlmittelkanal einen Einlass (27) und einen Auslass (29) definiert, die sich jeweils in der Nähe sich gegenüberliegender axialer Enden des Motorgehäuses befinden, wobei der Kühlmittelkanal (25) eine Vielzahl von axial beabstandeten, gewundenen Durchgängen definiert, die für einen fortlaufenden Strom von Flüssigkühlmittel von dem Einlass (27), dann nacheinander durch jeden der gewundenen Durchgänge und schließlich aus dem Auslass (29) angeordnet sind, **dadurch gekennzeichnet, dass**:
sich der Kühlmittelkanal (25) in zwei Gruppen von gewundenen Durchgängen teilt, die jeweils rechte Windungen (130R) und linke Windungen (130L) aufweisen, wobei die gewundenen Durchgänge jeweils das Flüssigkühlmittel durch eine Reihe von Strömungsrichtungsumkehrungen um die Motorgehäuseachse leiten, wobei sich das durch den Einlass (27) eintretende Kühlmittel in zwei Abschnitte teilt, von denen einer durch die rechten Windungen (130R) und der andere durch die linken Windungen (130L) strömt, wobei sich die Kühlmittelabschnitte wieder vereinigen und durch den Auslass (29) austreten.

2. Durch einen Elektromotor angetriebener Verdichter nach Anspruch 1, wobei der Kühlmittelkanal (25) ferner wenigstens einen ersten Umgehungskanal definiert, der sich mit den gewundenen Durchgängen kreuzt und sich auf eine nicht gewundene Weise erstreckt, um die gewundenen Durchgänge miteinander zu verbinden und einen alternativen Strömungsweg für einen Teil des Flüssigkühlmittels von dem Einlass zu dem Auslass bereitzustellen.

3. Durch einen Elektromotor angetriebener Verdichter nach Anspruch 2, wobei der Kühlmittelkanal (25) ferner einen zweiten Umgehungskanal definiert, der sich mit den gewundenen Durchgängen kreuzt und sich auf eine nicht gewundene Weise erstreckt, um die gewundenen Durchgänge miteinander zu verbinden, wobei der erste und der zweite Umgehungskanal in Umfangsrichtung voneinander beabstandet sind.

4. Durch einen Elektromotor angetriebener Verdichter nach Anspruch 1, ferner umfassend ein zweites Verdichtergehäuse (60), das an einem gegenüberliegenden Ende des Motorgehäuses befestigt ist, und ein zweites Radialverdichterrad (62), das in dem zweiten Verdichtergehäuse enthalten und an einem gegenüberliegenden Ende der Welle (26) befestigt ist, wobei das zweite Verdichtergehäuse (60) einen zweiten Verdichterströmungsweg definiert, der einen zweiten Lufteinlass (64) umfasst, der Luft in das zweite Verdichterrad (62) leitet, und eine zweite Verdichterschnecke, die Druckluft sammelt, die das zweite Verdichterrad (62) passiert hat und von demselben verdichtet wurde, und ferner umfassend eine Zwischenleitung (50), die die zweite Verdichterschnecke (66) auf eine solche Weise mit dem ersten Lufteinlass verbindet, dass von dem zweiten Verdichterrad (62) verdichtete Luft durch die Zwischenleitung (50) von der zweiten Verdichterschnecke in den ersten Lufteinlass geleitet und ferner von dem ersten Verdichterrad (42) verdichtet und in die erste Verdichterschnecke gefördert wird, wobei das zweite Verdichterrad (62) somit ein Niederdruckverdichterrad (42) darstellt und das erste Verdichterrad ein Hochdruckverdichterrad (62) darstellt.

5. Durch einen Elektromotor angetriebener Verdichter nach Anspruch 4, wobei der Einlass zu dem Kühlmittelkanal nahe dem Hochdruckverdichterrad (62) gelegen ist und der Auslass aus dem Kühlmittelkanal nahe dem Niederdruckverdichterrad (42) gelegen ist.

6. Durch einen Elektromotor angetriebener Verdichter nach Anspruch 4, wobei der nahe dem Hochdruckverdichterrad (62) gelegene gewundene Durchgang eine größere Querschnittsfläche als der nahe dem Niederdruckverdichterrad (42) gelegene gewundene Durchgang aufweist.

7. Durch einen Elektromotor angetriebener Verdichter nach Anspruch 4, ferner umfassend einen Hitzeschild (100), der zwischen dem Motorgehäuse (20) und dem ersten Verdichtergehäuse (40) angeordnet ist, wobei der Hitzeschild (100) einen Befestigungsflansch (102) definiert, der zwischen dem Motorgehäuse (20) und dem ersten Verdichtergehäuse (40) gehalten ist, wobei sich der Befestigungsflansch (102) in Kontakt mit einem durch den Kühlmittelkanal gekühlten Abschnitt des Motorgehäuses befindet, um eine Wärmeübertragung von dem Befestigungsflansch (102) zu dem Abschnitt des Motorgehäuses zu ermöglichen.

8. Durch einen Elektromotor angetriebener Verdichter nach Anspruch 1, ferner umfassend ein wärmeleitendes Material (140), das auf eine solche Weise zwischen dem Motorstator (22) und dem Motorgehäuse (20) angeordnet ist, dass sich das wärmeleitende Material (140) in Kontakt sowohl mit dem Motorstator (22) als auch mit dem Motorgehäuse (20) befindet und als Wärmeleitweg von dem Motorstator (22) zu dem Motorgehäuse (20) dient.

9. Durch einen Elektromotor angetriebener Verdichter nach Anspruch 8, wobei das wärmeleitende Material (140) ein wärmeleitendes Epoxid ist.

## Revendications

1. Compresseur entraîné par un moteur électrique (10), comprenant:
un ensemble de carter comprenant un carter de moteur (20) et un premier carter de compresseur (40) monté sur une première extrémité du carter de moteur (20), le carter de moteur (20) contenant un stator de moteur (22) et un rotor de moteur (24) présentant un arbre (26), le carter de moteur (20) définissant un alésage (30) à travers lequel le rotor de moteur (24) et l'arbre (26) passent;
le premier carter de compresseur (40) contenant une première roue de compresseur centrifuge (42) qui est montée sur une extrémité de l'arbre (26) afin de tourner avec celui-ci, le premier carter de compresseur (40) définissant également un premier chemin d'écoulement de compresseur comportant une première entrée d'air (44) qui conduit l'air dans la première roue de compresseur (42), et une première volute (46) qui collecte l'air comprimé qui est passé à travers et qui a été comprimé par la première roue de compresseur (42); et
le carter de moteur (20) définissant un passage convoluté d'agent de refroidissement liquide (25) dans celui-ci, le passage d'agent de refroidissement (25) définissant une entrée (27) et une sortie (29) situées respectivement à proximité d'extrémités opposées du carter de moteur, le passage d'agent de refroidissement (25) définissant une pluralité de passages convolutés espacés axialement les uns des autres agencés pour un écoulement en série d'un agent de refroidissement liquide à partir de l'entrée (27), ensuite à travers chacun des passages convolutés les uns après les autres, et finalement hors de la sortie (29),
**caractérisé en ce que** le passage d'agent de refroidissement (25) se divise en deux ensembles de passages convolutés qui présentent respectivement des convolutions côté droit (130R) et des convolutions côté gauche (130L), chacun des passages convolutés acheminant l'agent de refroidissement liquide à travers une série d'inversions de direction d'écoulement autour de l'axe de carter de moteur, dans lequel l'agent de refroidissement qui entre à travers l'entrée (27) se divise en deux parties, une première partie qui s'écoule à travers les convolutions côté droit (130R) et l'autre partie qui s'écoule à travers les convolutions côté gauche (130L), dans lequel lesdites parties d'agent de refroidissement se rejoignent et sortent à travers la sortie (29).

2. Compresseur entraîné par un moteur électrique selon la revendication 1, dans lequel le passage d'agent de refroidissement (25) définit en outre au moins un premier passage de dérivation qui coupe les passages convolutés et qui s'étend d'une façon non convolutée de manière à interconnecter les passages convolutés et à procurer un chemin d'écoulement alternatif pour une partie de l'agent de refroidissement liquide à partir de l'entrée jusqu'à la sortie.

3. Compresseur entraîné par un moteur électrique selon la revendication 2, dans lequel le passage d'agent de refroidissement (25) définit en outre un second passage de dérivation qui coupe les passages convolutés et qui s'étend d'une façon non convolutée de manière à interconnecter les passages convolutés, les premier et second passage de dérivations étant espacés circonférentiellement l'un de l'autre.

4. Compresseur entraîné par un moteur électrique selon la revendication 1, comprenant en outre un second carter de compresseur (60) monté sur une extrémité opposée du carter de moteur et une seconde roue de compresseur centrifuge (62) contenue dans le second carter de compresseur et fixée à une extrémité opposée de l'arbre (26), le second carter de compresseur (60) définissant un second chemin d'écoulement de compresseur comportant une seconde entrée d'air (64) qui conduit l'air dans la seconde roue de compresseur (62), et une seconde volute qui collecte l'air comprimé qui est passé à travers et qui a été comprimé par la seconde roue de compresseur (62), et comprenant en outre un conduit inter-étages (50) qui connecte la seconde volute (66) à la première entrée d'air de telle sorte que l'air comprimé par la seconde roue de compresseur (62) soit conduit par le conduit inter-étages (50) à partir de la seconde volute dans la première entrée d'air et soit comprimé davantage par la première roue de compresseur (42) et distribué dans la première volute, la seconde roue de compresseur (62) constituant de ce fait une roue de compresseur à basse pression et la première roue de compresseur (42) constituant une roue de compresseur à haute pression (62).

5. Compresseur entraîné par un moteur électrique selon la revendication 4, dans lequel l'entrée du passage d'agent de refroidissement est située à proximité de la roue de compresseur à haute pression (62), et la sortie du passage d'agent de refroidissement est située à proximité de la roue de compresseur à basse pression (42).

6. Compresseur entraîné par un moteur électrique selon la revendication 4, dans lequel le passage convoluté situé à proximité de la roue de compresseur à haute pression (62) présente une surface de section transversale plus grande que celle du passage convoluté situé à proximité de la roue de compresseur à basse pression (42).

7. Compresseur entraîné par un moteur électrique selon la revendication 4, comprenant en outre un bouclier thermique (100) qui est disposé entre le carter de moteur (20) et le premier carter de compresseur (40), dans lequel le bouclier thermique (100) définit une bride de montage (102) qui est coincée entre le carter de moteur (20) et le premier carter de compresseur (40), la bride de montage (102) étant en contact avec une partie du carter de moteur refroidie par le passage d'agent de refroidissement de manière à faciliter le transfert de chaleur de la bride de montage (102) à ladite partie du carter de moteur.

8. Compresseur entraîné par un moteur électrique selon la revendication 1, comprenant en outre un matériau conducteur de chaleur (140) qui est disposé entre le stator de moteur (22) et le carter de moteur (20) de telle sorte que le matériau conducteur de chaleur (140) soit en contact à la fois avec le stator de moteur (22) et le carter de moteur (20) et serve de chemin de passage thermiquement conducteur à partir du stator de moteur (22) jusqu'au carter de moteur (20).

9. Compresseur entraîné par un moteur électrique selon la revendication 8, dans lequel le matériau conducteur de chaleur (140) est un époxy conducteur de chaleur.
